# EUROPEAN PATENT APPLICATION

(11) **EP 3 216 699 A1**
(43) Date of publication of application: **13.09.2017**
(21) Application number: 17159591.1
(22) Date of filing: 07.03.2017
(51) Int. Cl.: B64D 27/18, B64D 27/26, F01D 25/28, F02C 7/20

(54) **METHOD AND SYSTEM FOR MOUNTING AN AIRCRAFT ENGINE**

(30) Priority: 10.03.2016 US 201615066403
(71) Applicant: General Electric Company, Schenectady, NY 12345 (US)
(72) Inventor: STUART, Alan Roy, West Chester, OH Ohio 45069 (US)
(74) Representative: Williams, Andrew Richard

(57) **Abstract**

A system 100 for mounting an engine 10 to an aircraft 1 includes a rigid structure 102 coupled to a wing 3 and including a forward mount interface 104 and an aft mount interface 106. The system includes a frame 115 including a first support connection 108 and a second support connection 110 spaced apart from the first support connection. A linkage structure 114 couples the frame to the rigid structure and includes a first linkage pair 116 extending between the forward mount interface and the first support connection at a first angle α with respect to a rotational axis 40, and a second linkage pair 118 extending between the aft mount interface and the second support connection at a second angle β with respect to the rotational axis. A projection of the load vector 120,122 of the first linkage pair and the second linkage pair intersect proximate the rotational axis of the engine between a forward end of a fan assembly 16 and a high pressure compressor 22.

## Description

### BACKGROUND

The present invention generally relates to systems and methods for mounting an aircraft engine to an aircraft. More particularly, this invention relates to a mounting system and method adapted to reduce backbone deflection that can occur in an aircraft engine as a result of aerodynamic, gravitational, inertial, and thrust loads during aircraft operation.

At least some known gas turbine engines, such as turbofans, include a fan, a core engine, and a power turbine. The core engine includes at least one compressor, a combustor, and a high-pressure turbine coupled together in a serial flow relationship. More specifically, the compressor and high-pressure turbine are coupled through a shaft to form a high-pressure rotor assembly. Air entering the core engine is mixed with fuel and ignited to form a high energy gas stream. The high energy gas stream flows through the high-pressure turbine to rotatably drive the high-pressure turbine such that the shaft rotatably drives the compressor. The gas stream expands as it flows through a power or low-pressure turbine positioned aft of the high-pressure turbine. The low-pressure turbine includes a rotor assembly having a fan coupled to a drive shaft. The low-pressure turbine rotatably drives the fan through the drive shaft. Turbine engine performance is enhanced when the low-pressure turbine operates at a relatively high rotational speed and when the fan operates at a relatively low rotational speed and with a low pressure ratio.

As engine bypass ratios are increased, the larger fan and increased airflow result in higher loads at take-off rotation. A large lift load is created on the engine inlet as internal and some external airflow is turned to align with the engine axis. This load represents a major contribution to the backbone bending moment. The engine thrust also creates a pitching moment depending on whether the focal point of the engine's mounting system is on, above or below the engine center-line. The smaller core diameters associated with increased bypass ratio engines, together with increased pressure ratios and smaller blade heights, make the core engine more sensitive to backbone bending. At least some engines include more open tip clearances, to accommodate backbone bending. However, such open tip clearances may result in a reduction in fuel economy.

### BRIEF DESCRIPTION

In one aspect, a system for mounting an engine to an engine support structure of an aircraft is provided. The system includes a rigid structure coupled to a wing of the aircraft and including a forward mount interface and an aft mount interface. Each of the forward mount interface and the aft mount interface receives a thrust component of load. The system also includes a frame surrounding a rotational axis of the engine. The frame includes a first support connection and a second support connection spaced apart from the first support connection along an upper portion of the frame. A linkage structure couples the frame to the rigid structure. The linkage structure includes a first linkage pair and a second linkage pair. The first links extend between the forward mount interface and the first support connection at a first angle with respect to the rotational axis. The second links extend between the aft mount interface and the second support connection at a second angle with respect to the rotational axis. As viewed from the side, a projection of the load vector of the first linkage pair and the second linkage pair intersect proximate the rotational axis of the engine between a forward end of an engine propulsive fan assembly and the front of a high pressure compressor of the engine.

In another aspect, a method of coupling an engine to an aircraft wing is provided. The method includes coupling a rigid structure to the aircraft wing. The rigid structure includes a forward mount interface and an aft mount interface. Each of the forward mount interface and an aft mount interface receives a thrust component of load. The method also includes coupling a frame about the engine such the frame surrounds a rotational axis of the engine. The frame includes a first support connection and a second support connection spaced apart along an upper portion of the frame. The method further includes coupling the first links of a linkage structure to the forward mount interface and the first support connection at a first angle with respect to the rotational axis, and coupling the second links of the linkage structure to the aft mount interface and the second support connection at a second angle with respect to the rotational axis. As viewed from the side, a projection of the load vector of the first links and the second links intersect proximate the rotational axis of the engine and a plane of a fan rotor.

In yet another aspect, an aircraft is provided. The aircraft includes a wing, an engine, a pylon coupled between the wing and the engine. The pylon includes a forward mount interface and an aft mount interface. Each of the forward mount interface and the aft mount interface receives a thrust component of load. The aircraft also includes a frame surrounding a rotational axis of the engine. The frame includes a first support connection and a second support connection spaced apart from the first support connection along an upper portion of the frame. A linkage structure couples the frame to the pylon. The linkage structure includes a first linkage pair and a second linkage pair. The first linkage pair extends between the forward mount interface and the first support connection at a first angle with respect to the rotational axis. The second linkage pair extends between the aft mount interface and the second support connection at a second angle with respect to the rotational axis. As viewed from the side, the load vector of the first links and the second links intersect proximate the rotational axis of the engine and a plane of a fan rotor.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an aircraft in accordance with an example embodiment of the present disclosure.
FIG. 1A side elevation view of a high-bypass turbofan engine that may be used with the aircraft shown in FIG. 1.
FIG. 2 is a side view of a high-bypass turbofan engine equipped with a system for mounting the engine to an aircraft wing support structure according to an embodiment of the invention.
FIG. 2A is a plan view taken of area 2A shown in FIG. 2.
FIGS. 3 and 4 represent different loading conditions imposed on the engine and mounting system of FIG. 2.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

Embodiments of the present disclosure relate to mounting systems for mounting turbine engine assemblies to an aircraft wing. More specifically, the mounting systems described herein are designed to reduce or eliminate backbone bending of the engine within the engine nacelle during certain engine operating conditions. In one embodiment, an aft leaning linkage structure is coupled between a pylon of the aircraft wing and the inner frame of the engine. As viewed from the side, the linkage structure includes at least first and second links that each includes load vectors extending therefrom and intersecting at a focal point proximate the rotational axis of the engine and a fan rotor near the engine inlet. The selection of the position of the point of intersection (as viewed from the side) of the load vectors of the first and second links proximate the engine axis facilitates reducing or eliminating backbone bending of the engine during various engine operational modes.

Locating the focal point of the mounting system at or near a location relative to the inlet loading and engine centerline reduces backbone bending to negligible levels, even in large turbofan engines that generate high thrust levels. Additionally, the mounting system described below couples the aircraft wing to the frame of the engine such that the mounting system is not coupled to the nacelle or the core cowl. Furthermore, the mounting system is capable of achieving this benefit while avoiding a substantial penalty in cost or weight typically associated with prior efforts to reduce backbone bending.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine.

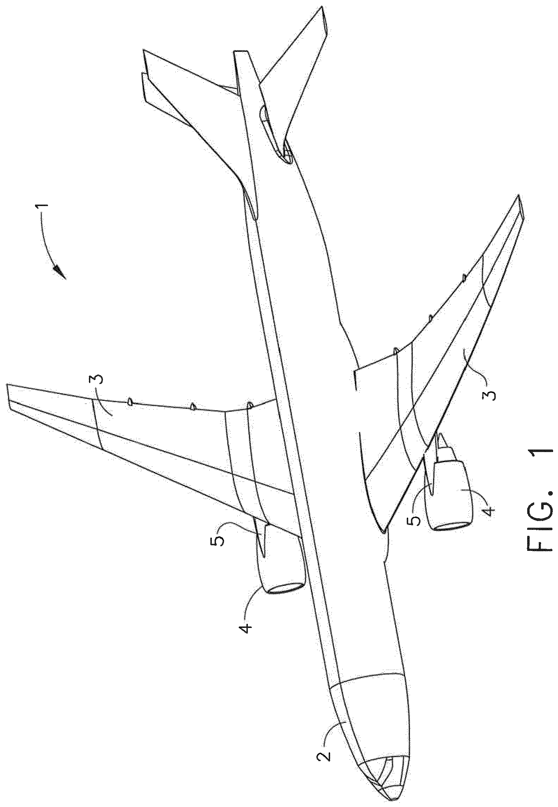

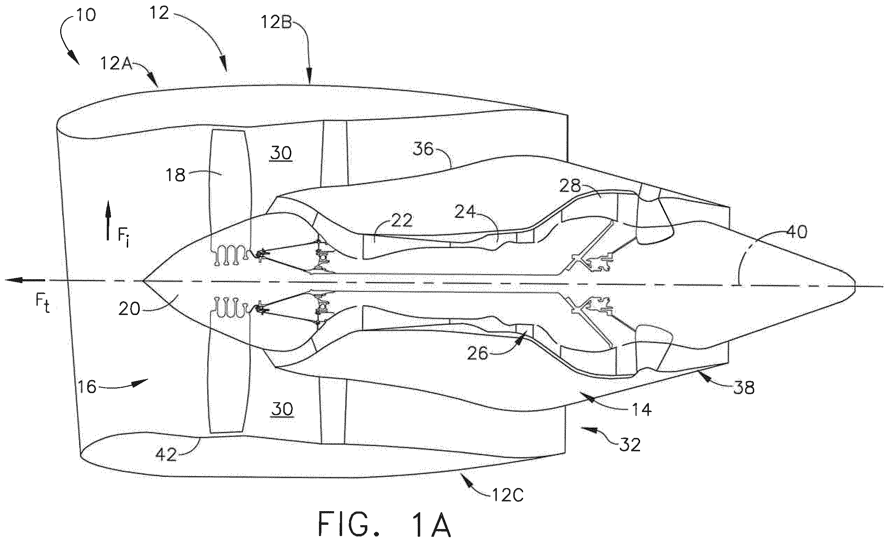

FIG. 1 is a perspective view of an aircraft 1 in accordance with an example embodiment of the present disclosure. In the example embodiment, aircraft 1 includes a fuselage 2 and a pair of laterally extending wings 3. Each wing includes an engine 4 fixedly coupled to wing 3 through a pylon 5. FIG. 1A schematically represents a high-bypass turbofan engine 10 that may be used with aircraft 1 (shown in FIG. 1). Engine 10 is schematically represented as including a nacelle 12 and a core engine (module) 14. A fan assembly 16 located in front of core engine 14 includes a spinner nose 20 projecting forwardly from an array of fan blades 18. Core engine 14 is schematically represented as including a high-pressure compressor (HPC) 22, a combustor 24, a high-pressure turbine (HPT) 26 and a low-pressure turbine (LPT) 28. A large portion of the air that enters fan assembly 16 is bypassed to the rear of engine 10 to generate additional engine thrust. The bypassed air passes through an annular-shaped bypass duct 30 between nacelle 12 and an inner core cowl 36, and exits duct 30 through a fan exit nozzle 32. Core cowl 36 defines the radially inward boundary of bypass duct 30, and provides an aft core cowl transition surface to a primary exhaust nozzle 38 that extends aftward from core engine 14. Nacelle 12 defines the radially outward boundary of bypass duct 30, and the bypassed fan air flows between bypass duct flow surfaces defined by nacelle 12 and core cowl 36 before being exhausted through fan exit nozzle 32.

Nacelle 12 is typically composed of three primary elements that define the external boundaries of nacelle 12: an inlet assembly 12A located upstream of the fan assembly 16, a fan cowl 12B interfacing with an engine fan case 42 that surrounds fan blades 18, and a thrust reverser assembly 12C located aft of fan cowl 12B. Furthermore, core cowl 36 is a component of nacelle 12 and provides a shell around core engine 12.

When installed on an aircraft, engine 10 is supported by a rigid aircraft structure, for example, a pylon (not shown in FIG. 1) that extends outward from the aircraft. In the case of an engine mounted to a wing, the pylon typically extends downwardly beneath the wing. Structural components of the pylon are connected to a frame 115 of core engine 12 that supports the rotating components of HPC 22 and turbines 26 and 28. In the exemplary embodiment, frame 115 includes an engine frame or a fan frame. Frame 115 typically includes a forward frame adjacent HPC 22, an aft frame adjacent turbines 26 and 28, and an engine casing that connects the forward and aft frames. The engine casing is often referred to as the backbone of engine 10. Aircraft engines of the type represented in FIG. 1 are typically mounted and secured to an aircraft in two planes normal to engine centerline 40. One mount is typically connected to the forward frame often just rearward of fan assembly 16, and a second mount is typically connected to the aft frame near the turbine section.

During climb and certain aircraft operating modes, centerline 40 of engine 10 is pitched relative to the direction of approaching airflow, with the result that nacelle 12 can be subjected to upward aerodynamic loading. This aerodynamically-induced load, often referred to as the inlet load and represented by the vector Fi in FIG. 1A, is in addition to the thrust load, represented by the vector Ft in FIG. 1. These loads induce bending moments in the engine casing (backbone); with the result that the backbone is deflected (bends) from its concentric position about engine centerline 40. Maintaining concentricity of the engine backbone about centerline 40 is important from the standpoint of minimizing blade tip clearances within HPC 22 and turbine sections 26 and 28 of engine 10, which has the beneficial effect of improving engine specific fuel consumption (SFC) and fuel burn. In addition, reduced backbone bending reduces the incidence of blade tip rub encounters with the surrounding engine structures (including the fan case 42), which promotes in-service performance retention. Engines with a longer interval for time on-wing to removal for service provide reduced service contract costs to their operators.

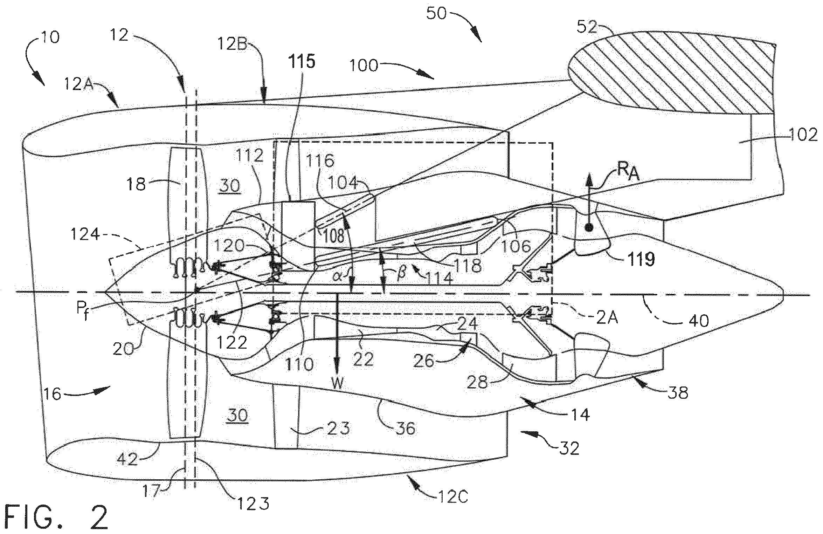

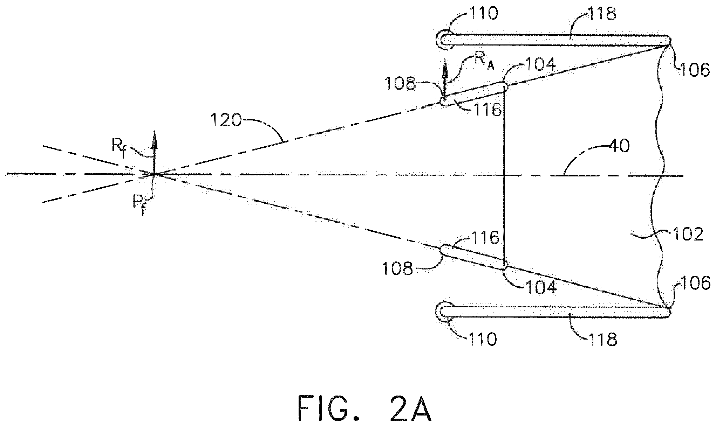

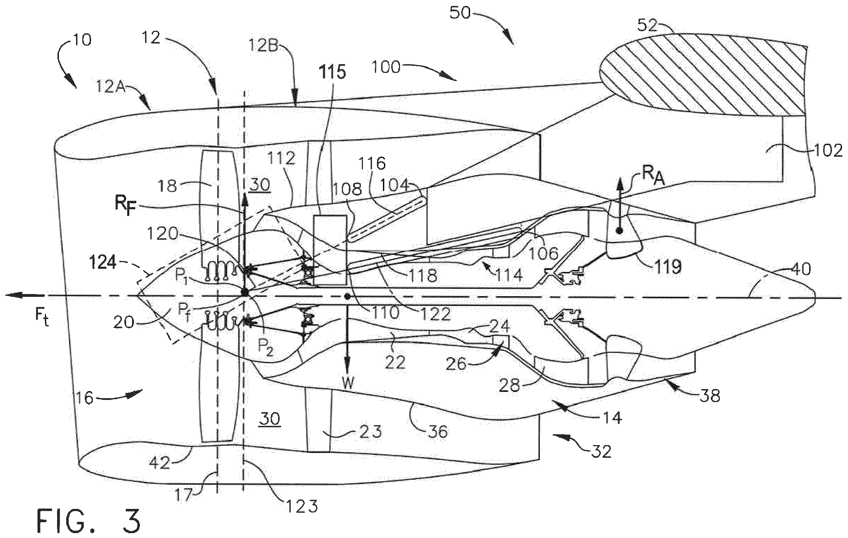

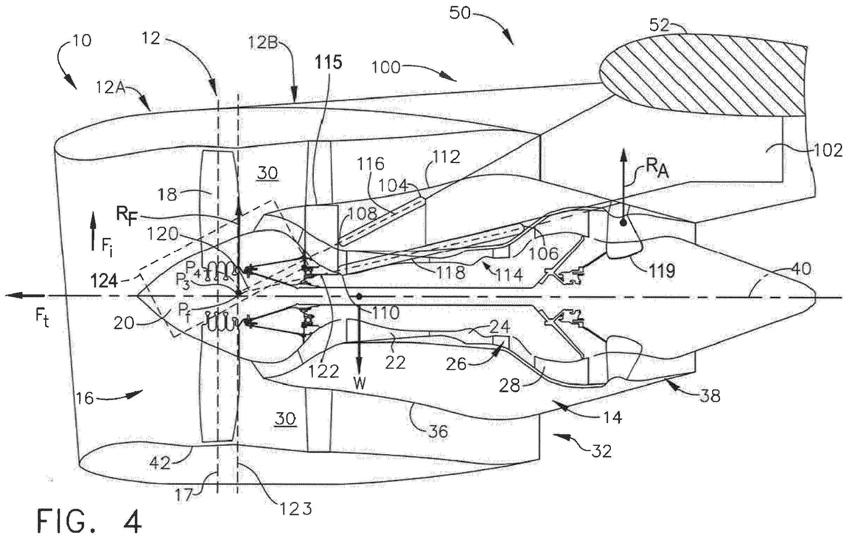

FIG. 2 is a side view of an exemplary high-bypass turbofan engine 10 equipped with a mounting system 100 for mounting engine 10 to a wing 52 of an aircraft 50. FIG. 2A is a plan view taken of area 2A (shown in FIG. 2). FIG. 2 represents engine 10 in a nonoperational mode with the weight W of engine 100 being the only load acting on mounting system 100. FIG. 3 represents engine 10 in a take-off or cruise loading condition where thrust from engine 10 propels aircraft 50 at a high rate of speed down the runway prior to takeoff or through the air. FIG. 4 represents engine 10 in a climbing or lift-off loading condition. Mounting system 100 can be installed in a high-bypass gas turbofan engine of the type represented in FIG. 1 and therefore, as a matter of convenience, the same numbers used in FIG. 1 to identify engine 10 and its components will be used in FIGS. 2 through 4 to identify the same or functionally equivalent components. To facilitate the description of the system 100 provided below, the terms "vertical," "horizontal," "lateral," "forward," "aft," "upper," "lower," "above," "below," etc., may be used in reference to the perspective of the installation and orientation of engine 10 on aircraft 50, and therefore are relative terms that indicate the construction, installation and use of the invention and help to define the scope of the invention. However, it is within the scope of the invention that system 100 could be installed on an engine that markedly differs from engine 10 shown in the drawings, or installed at other points of aircraft 50, for example, the fuselage. Finally, it is foreseeable that system 100 could find uses in applications other than aircraft engines.

As shown in FIG. 2, mounting system 100 includes a rigid structure, or pylon, 102 coupled to the engine support structure of aircraft wing 52 through, for example, a clevis and lug type connector with a uni-ball or a spherical bearing. Pylon 102 is also coupled to engine 10 and includes a forward mount interface 104 and an aft mount interface 106. In the exemplary embodiment, each of forward mount interface 104 and aft mount interface 106 receives at least a portion of a thrust component of a load in certain engine operating modes.

Mounting system 100 also includes frame 115 surrounding rotational axis 40 of engine 10. In the exemplary embodiment, frame 115 includes a first support connection 108 and a second support connection 110 spaced apart from first support connection 108.

In the exemplary embodiment, mounting system 100 also includes a linkage structure 114 coupled between frame 115 and pylon 104 and configured to secure frame 115 to pylon 102. Together, pylon 102, frame 115, and linkage structure 114 form a statically determinate structure. Linkage structure 114 includes at least a pair of first links 116, a pair of second links 118, and a pair of aft links 119. As viewed in the side view of FIG. 2A, both links of first links 116 form the same angle with respect to rotational axis 40 and both links of second links 118 form the same angle with respect to rotational axis 40. As illustrated in FIG. 2A, however, first links 116 are angled inward with respect to rotational axis 40, while second links 118 are approximately parallel to rotational axis 40.

In the exemplary embodiment, first pair of symmetric links 116 (only one shown in FIG. 2) extend between a respective forward mount interface 104 on pylon 102 to first support connection 108 on frame 115. More specifically, first linkage pair 116 is pivotally coupled at one end to pylon forward mount interface 104 and also pivotally coupled at the opposite end thereof to frame 115 first support connection 108. In the exemplary embodiment, first linkage pair 116 is coupled between pylon 102 and frame 115 such that first linkage pair 116 defines a first angle α with respect to rotational axis 40.

Similarly, second linkage pair 118 extends between aft mount interface 106 on pylon 102 and second support connection 110 on frame 115. More specifically, second linkage pair 118 is pivotally coupled at one end to pylon aft mount interface 106 and is also pivotally coupled at the opposite end thereof to frame 115 second support connection 110. In the exemplary embodiment, second linkage pair 118 is coupled between pylon 102 and frame 115 such that second linkage pair 118 defines a second angle β with respect to rotational axis 40. As shown in FIG. 2, second angle β is less than first angle α.

Linkage structure 114 provides a connection between engine 10 and pylon 102 of aircraft wing 52 (or other suitable support structure) that significantly reduces backbone bending/deflection within core engine 14 that would otherwise result from thrust and inlet loads of the type previously described in reference to FIG. 1. Additionally, linkage structure 114 is coupled only between frame 115 and pylon 102, and, therefore, is not coupled to any portion of nacelle 12 or fan casing 42. In some embodiments, backbone bending/deflection may potentially be reduced to negligible levels or even zero.

As shown in FIG. 2, first linkage pair 116 includes a load vector 120 of a force (or forces within the same plane) transmitted through first linkage pair 116. Similarly, second linkage pair 118 includes a load vector 122 of a force (or forces within the same plane) transmitted through second linkage pair 118. In the exemplary embodiment, a projection of resultant load vectors 120 and 122 onto a vertical plane that extends through rotational axis 40 intersect at a point that lies within a planar area 124. Planar area 124, in a first embodiment, extends from an approximate axial midpoint of HPC 22 forward to approximately a tip of spinner nose 20. In a second embodiment, planar area 124 extends from an approximate forward end of HPC 22 forward to a forward end of fan assembly 16. In another embodiment, planar area 124 extends axially between an HPC 22 inlet guide vane 23 and a fan assembly plane 17. In other embodiments, a planar area 124 is angled approximately 25° to approximately 30° counterclockwise as viewed in FIG. 2. More specifically, a projection of load vectors 120 and 122 onto planar area 124 intersect with each other proximate rotational axis 40 at a focal point Pf along fan assembly plane 17. Because load vectors 120 are not parallel with respect to each other and because load vectors 122 are approximately parallel to rotational axis 40, they may not intersect rotational axis 40 at any point. However, the projections of load vectors 120 and 122 onto planar area 124 can intersect each other within the boundaries of planar area 124 proximate rotational axis 40.

The capability of mounting system 100 to potentially reduce backbone bending/deflection to low values or zero can be further understood from reference to FIGS. 2-4. FIG. 2 diagrammatically represents relative force vectors that exist solely as a result of the weight, W, of engine 10 (no engine operation), and indicates that the engine weight is shared between first and second links 116 and 118 and aft mount vertical reaction Ra at aft links 119. More specifically, FIG. 2 represents a first mode of engine 10 operation where engine 10 is either shut down, or all other forces acting upon engine 10 are balanced.

FIG. 3 diagrammatically represents conditions that exist during a second mode of engine 10 operation, such as during take-off while aircraft 50 is traveling down the runway or during level flight when additional thrust is required. As shown in FIG. 3 first and second links 116 and 118 of linkage structure 114 are subjected to additional forces resulting from engine thrust, Ft. Specifically, as can be seen in FIG. 3, because the focal point Pf is shown above the centerline, engine thrust Ft causes a reduced forward vertical reaction Rf at focal point Pf acting in an opposite direction to the weight force reaction W. Similarly, engine thrust Ft causes an aft reaction Ra at aft links 119 acting in an upward direction adding to the weight force reaction W. In the loading condition shown in FIG. 3, forward reaction Rf is reduced by an equal and opposite amount, together offsetting the thrust Ft moment. Additionally, the closer focal point Pf is to centerline 40, the smaller the increase in aft reaction Ra from the balanced static load condition of FIG. 2 to the additional thrust condition in FIG. 3.

FIG. 4 diagrammatically represents conditions that exist during a third mode of engine 10 operation, such as during lift-off or when aircraft 50 is climbing. As shown in FIG. 4, links 116, 118, and 119 of linkage structure 114 are subjected to additional forces resulting from engine thrust, Ft, but are also subjected to inlet load Fi caused by the increased angle of attack of aircraft 50 during lift-off and climbing load conditions. Specifically, as can be seen in FIG. 4, engine thrust Ft and inlet load Fi cause forward reaction Rf at focal point Pf acting in a downward direction opposite the weight force W reaction. Similarly, engine thrust Ft and inlet load Fi cause an increase in aft reaction Ra at aft links 119 acting in an upward direction adding to the weight force W reaction. In the loading condition shown in FIG. 4, forward reaction Rf is reduced or may become negative and the aft reaction Ra is increased as compared to the loading conditions shown in FIG. 3. In the exemplary embodiment, the more forward the focal point Pf, the smaller the increase in backbone bending due to inlet load Fi. Additionally, in the loading condition shown in FIG. 4, aft reaction Ra is larger than aft reaction Ra during the loading conditions shown in FIG. 3. As aircraft 50 reaches cruise and levels out, inlet load Fi decreases and forward and aft reactions Rf and Ra return to canceling the weight reaction W and thrust force Ft only, as shown in FIG. 3. In the exemplary embodiment, as described herein, the location of focal point Pf, forward of HPC 22, frame 115, and a leading edge of core cowl 36 facilitates reduced backbone bending of engine 10 during the lift-off and climbing load conditions.

In the exemplary embodiment, inlet load Fi, is indicated as being additionally present as a result of the aircraft being in a climb, during which nacelle 12 is subjected to upward aerodynamic loading as a result of centerline 40 of engine 10 being pitched upward relative to the direction of approaching airflow. Notably, FIG. 4 represents loads for engine thrust and inlet loads, Ft and Fi, as imposing load moments in the same or opposite directions around focal point Pf of links 116 and 118 depending on whether the focal point Pf is above or below the engine center line 40. The result is that their moments can cancel out each other to some extent if their distances relative to focal point Pf are appropriate for their respective magnitudes of Ft and Fi. By reducing the bending moment induced in engine 10 by the inlet load Fi, and the thrust force Ft, the backbone of core engine 14 will be subjected to less bending or deflection.

The magnitude of the load in first support structure 108 and second support structure 110 under the conditions represented in FIG. 4 will vary depending upon the actual values of weight W, Thrust Ft and Inlet load Fi experienced during a flight. Consequently, the location of focal point Pf being forward of frame 115 is a preferred aspect of the invention in order to significantly reduce bending and deflection of the backbone of core engine 14. In addition, the focal point Pf is preferably located in close proximity to the intersection of the engine thrust and inlet load vectors, Ft and Fi, so as to be located within the fan inlet assembly 12A of engine 10. In practice, the distributed mass of the engine also contributes to engine backbone bending and the best position of the focal point will be found within the area claimed to minimize all sources of backbone bending throughout an aircraft flight. More specifically, moving focal point Pf forward as compared to known engine designs minimizes bending. Even more specifically, load vectors 120 and 122 intersect at focal point Pf proximate the intersection of rotational axis 40 of engine 10 and fan assembly plane 17 near the engine inlet. The selection of the position of the point of intersection (as viewed from the side) of the load vectors of the first and second links proximate the engine axis facilitates reducing or eliminating backbone bending of the engine during various engine operational modes.

It should be understood that the system described is statically determinate and that "fail safe' considerations would include additional "waiting fail-safe" features or additional links, making a non-statically determinate system of the same performance with respect to reducing backbone bending.

From the foregoing, it should be appreciated that the location of the focal point, Pf, can be achieved with combinations and configurations of links and mounting locations that differ from what is represented in the Figures, and such other combinations and configurations are within the scope of the invention. Suitable alternatives can be readily ascertained by utilizing applied mathematics vector analysis to derive moments.

A technical effect of the invention is the ability to locate the focal point of the mounting system at or near a location relative to the inlet loading and engine centerline that can potentially reduce backbone bending to negligible levels, even in large turbofan engines that generate high thrust levels. Additionally, the mounting system couples the aircraft wing to the frame of the engine such that the mounting system is not coupled to the nacelle or the fan case. Furthermore, the mounting system is capable of achieving this benefit while avoiding a substantial penalty in cost or weight typically associated with prior efforts to reduce backbone bending.

The above-described embodiments of a method and system of coupling on engine to an aircraft wing through a pylon provides a cost-effective and reliable means for reducing loads in an aft mount of the pylon and reducing load variations during different modes of operation. More specifically, the methods and systems described herein also facilitate improving build clearances for the high pressure compressor and the high pressure turbine and permitting a decreased profile of fairing of the pylon. As a result, the methods and systems described herein facilitate coupling the engine to the aircraft in a cost-effective and reliable manner.

Exemplary embodiments of mounting systems are described above in detail. The mounting systems, and methods of operating such systems and devices are not limited to the specific embodiments described herein, but rather, components of systems and/or steps of the methods may be utilized independently and separately from other components and/or steps described herein. For example, the methods may also be used in combination with other systems requiring mounting of components, and are not limited to practice with only the systems and methods as described herein.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for mounting an engine to an engine support structure of an aircraft, the system comprising:
   a rigid pylon structure coupled to a wing of the aircraft and including at least a forward mount interface and an aft mount interface, each of said forward mount interface and said aft mount interface receiving a thrust component of a load;
      a frame surrounding a rotational axis of the engine, said frame comprising a first support connection and a second support connection spaced apart from said first support connection along an upper portion of said frame; and
   a linkage structure coupling said frame to said rigid structure, said linkage structure comprising a first linkage pair and a second linkage pair, said first linkage pair extending between said forward mount interface and said first support connection at a first angle with respect to the rotational axis, said second linkage pair extending between said aft mount interface and said second support connection at a second angle with respect to the rotational axis, wherein a projection of a load vector of said first linkage pair onto a vertical plane extending through the rotational axis of the engine and a projection of a load vector of said second linkage pair intersect proximate the rotational axis of the engine at a focal point within a planar area vertically perpendicular to the rotational axis and extending between a forward end of a nose of a fan assembly and an axial midpoint of a high pressure compressor of said engine.
2. The system of clause 1, wherein said planar area extends between a forward end of said fan assembly and an axially forward end of said high pressure compressor of said engine.
3. The system of clause 1 or 2, wherein said planar area extends between a rotation plane of said fan assembly and an inlet guide vane of said high pressure compressor of said engine.
4. The system of any preceding clause, wherein the projection of the load vector of said first linkage pair and said second linkage pair intersect proximate the rotational axis of the engine.
5. The system of any preceding clause, wherein said linkage structure comprises a third linkage pair coupled to said frame aft of said first and second linkage pairs.
6. The system of any preceding clause, wherein the projection of the load vector of said first linkage pair onto a vertical plane extending through the rotational axis of the engine and the projection of the load vector of said second linkage pair intersect at a focal point aft of a plane of a fan rotor and forward of said frame radially above the rotational axis.
7. The system of any preceding clause, wherein the focal point is located any of radially above, radially below, or directly on the rotational axis.
8. The system of any preceding clause, wherein said rigid structure, frame, and linkage structure comprise a statically determinate structure.
9. The system of any preceding clause, wherein said linkage structure is not coupled to a casing of a fan of said engine.
10. The system of any preceding clause, wherein said first linkage pair is pivotally mounted to said forward mount interface and said second linkage pair is pivotally mounted to said aft mount interface.
11. The system of any preceding clause, wherein said rigid structure comprises a pylon.
12. A method of coupling an engine to an aircraft wing, said method comprising:
   coupling a rigid structure to the aircraft wing, wherein the rigid structure includes a forward mount interface and an aft mount interface, each of said forward mount interface and an aft mount interface receiving a thrust component of a load;
   coupling a frame about the engine such that the frame surrounds a rotational axis of the engine, the frame including a first support connection and a second support connection spaced apart along an upper portion of the frame;
   coupling a first linkage pair of a linkage structure to the forward mount interface and the first support connection at a first angle with respect to the rotational axis; and
   coupling a second linkage pair of the linkage structure to the aft mount interface and the second support connection at a second angle with respect to the rotational axis, wherein a projection of a load vector of the first linkage pair and the second linkage pair intersect proximate a plane of a fan rotor, wherein said plane is perpendicular to the rotational axis.
13. The method in accordance with clause 12, wherein coupling the first linkage pair and coupling the second linkage pair comprise coupling the first linkage pair and coupling the second linkage pair such that the projection of the load vector of the first linkage pair and the second linkage pair intersect proximate the rotational axis of the engine.
14. The method in accordance with clause 12 or 13, further comprising coupling a third linkage pair of the linkage structure to the frame and the rigid structure aft of the first linkage pair and the second linkage pair.
15. The method in accordance with any of clauses 12 to 14, wherein the projections of a load vector of the first linkage pair and the second linkage pair intersect proximate the rotational axis of the engine at a focal point within a planar area vertically perpendicular to the rotational axis and extending between a forward end of a nose of a fan assembly and an axial midpoint of a high pressure compressor of the engine.
16. The method in accordance with any of clauses 12 to 15, wherein:
   coupling a first linkage pair of a linkage structure to the forward mount interface includes pivotally coupling the first linkage pair of a linkage structure to the forward mount interface; and
   coupling a second linkage pair of a linkage structure to the aft mount interface includes pivotally coupling the second linkage pair of a linkage structure to the aft mount interface.
17. An aircraft comprising:
   a wing;
   an engine;
   a pylon coupled between said wing and said engine, said pylon comprising a forward mount interface and an aft mount interface, each of said forward mount interface and said aft mount interface receiving a thrust component of a load;
   a frame surrounding a rotational axis of said engine, said frame comprising a first support connection and a second support connection spaced apart from said first support connection along an upper portion of said frame; and
   a linkage structure coupling said frame to said pylon, said linkage structure comprising a first linkage pair and a second link, said first linkage pair extending between said forward mount interface and said first support connection at a first angle with respect to the rotational axis, said second linkage pair extending between said aft mount interface and said second support connection at a second angle with respect to the rotational axis, wherein a projection of the load vector of said first linkage pair and said second linkage pair onto a vertical plane extending through rotational axis of said engine intersects the rotational axis of the engine proximate a plane of a fan assembly, wherein said plane is vertically perpendicular to the rotational axis.
18. The aircraft of clause 17, wherein the projection of the load vector of said first linkage pair and said second linkage pair intersect proximate the rotational axis of the engine.
19. The aircraft of clauses 17 or 18, wherein said linkage structure is not coupled to a casing of a fan of said engine.
20. The aircraft of any of clauses 17 to 19, wherein said first linkage pair is pivotally mounted to said forward mount interface, and wherein said second linkage pair is pivotally mounted to said aft mount interface.

## Claims

1. A system (100) for mounting an engine (10) to an engine support structure (3) of an aircraft (1), the system comprising:
a rigid pylon structure (102) coupled to a wing (3) of the aircraft and including at least a forward mount interface (104) and an aft mount interface (106), each of said forward mount interface and said aft mount interface receiving a thrust component of a load;
a frame (115) surrounding a rotational axis (40) of the engine, said frame comprising a first support connection (108) and a second support connection (110) spaced apart from said first support connection along an upper portion of said frame; and
a linkage structure (114) coupling said frame to said rigid structure, said linkage structure comprising a first linkage pair (116) and a second linkage pair (118), said first linkage pair extending between said forward mount interface and said first support connection at a first angle α with respect to the rotational axis, said second linkage pair extending between said aft mount interface and said second support connection at a second angle β with respect to the rotational axis, wherein a projection of a load vector (120) of said first linkage pair onto a vertical plane extending through the rotational axis of the engine and a projection of a load vector (122) of said second linkage pair intersect proximate the rotational axis of the engine at a focal point Pf within a planar area (124) vertically perpendicular to the rotational axis and extending between a forward end of a nose (20) of a fan assembly (16) and an axial midpoint of a high pressure compressor (22) of said engine.

2. The system (100) of Claim 1, wherein said planar area (124) extends between a forward end of said fan assembly (16) and an axially forward end of said high pressure compressor (22) of said engine (10).

3. The system (100) of Claim 1 or 2, wherein said planar area (124) extends between a rotation plane (17) of said fan assembly (16) and an inlet guide vane (23) of said high pressure compressor (22) of said engine (10).

4. The system (100) of any preceding Claim, wherein the projection of the load vector (120, 122) of said first linkage pair (116) and said second linkage pair (118) intersect proximate the rotational axis (40) of the engine (10).

5. The system (100) of any preceding Claim, wherein said linkage structure (114) comprises a third linkage pair (119) coupled to said frame (115) aft of said first and second linkage pairs (116, 118).

6. The system (100) of any preceding Claim, wherein the projection of the load vector (120) of said first linkage pair (116) onto a vertical plane (124) extending through the rotational axis (40) of the engine (10) and the projection of the load vector (122) of said second linkage pair (118) intersect at a focal point Pf aft of a plane (17) of a fan rotor (20) and forward of said frame (115) radially above the rotational axis.

7. The system (100) of any preceding Claim, wherein the focal point Pf is located any of radially above, radially below, or directly on the rotational axis (40).

8. The system (100) of any preceding Claim, wherein said rigid structure (102), frame (115), and linkage structure (114) comprise a statically determinate structure.

9. The system (100) of any preceding Claim, wherein said linkage structure (114) is not coupled to a casing (36, 42) of a fan of said engine (10).

10. The system (100) of any preceding Claim, wherein said first linkage pair (116) is pivotally mounted to said forward mount interface (104) and said second linkage pair (118) is pivotally mounted to said aft mount interface (106).

11. A method of coupling an engine (10) to an aircraft wing (3), said method comprising:
coupling a rigid structure (102) to the aircraft wing (3), wherein the rigid structure includes a forward mount interface (104) and an aft mount interface (106), each of said forward mount interface (104) and an aft mount interface (106) receiving a thrust component of a load;
coupling a frame (115) about the engine (10) such that the frame surrounds a rotational axis (40) of the engine, the frame including a first support connection (108) and a second support connection (110) spaced apart along an upper portion of the frame;
coupling a first linkage pair (116) of a linkage structure to the forward mount interface and the first support connection at a first angle with respect to the rotational axis; and
coupling a second linkage pair (118) of the linkage structure (114) to the aft mount interface (106) and the second support connection at a second angle with respect to the rotational axis, wherein a projection of a load vector (120, 122) of the first linkage pair (116) and the second linkage pair (118) intersect proximate a plane (17) of a fan rotor (20), wherein said plane (17) is perpendicular to the rotational axis (40).

12. The method in accordance with Claim 11, wherein coupling the first linkage pair (116) and coupling the second linkage pair (118) comprise coupling the first linkage pair and coupling the second linkage pair such that the projection of the load vector of the first linkage pair and the second linkage pair intersect proximate the rotational axis (40) of the engine (10).

13. The method in accordance with Claim 11 or 12, further comprising coupling a third linkage pair of the linkage structure (114) to the frame (115) and the rigid structure aft of the first linkage pair and the second linkage pair.

14. The method in accordance with any of Claims 11 to 13, wherein the projections of a load vector of the first linkage pair (116) and the second linkage pair (118) intersect proximate the rotational axis (40) of the engine (10) at a focal point within a planar area (124) vertically perpendicular to the rotational axis and extending between a forward end of a nose of a fan assembly (16) and an axial midpoint of a high pressure compressor of the engine (22).

15. An aircraft comprising:
a wing (3);
an engine (10);
a pylon coupled between said wing and said engine, said pylon comprising a forward mount interface (104) and an aft mount interface (106), each of said forward mount interface and said aft mount interface receiving a thrust component of a load;
a frame (115) surrounding a rotational axis (40) of said engine, said frame comprising a first support connection (108) and a second support connection (110) spaced apart from said first support connection along an upper portion of said frame; and
a linkage structure (114) coupling said frame to said pylon, said linkage structure comprising a first linkage pair (116) and a second link, said first linkage pair (118) extending between said forward mount interface and said first support connection at a first angle with respect to the rotational axis, said second linkage pair extending between said aft mount interface and said second support connection at a second angle with respect to the rotational axis, wherein a projection of the load vector (122) of said first linkage pair and said second linkage pair onto a vertical plane extending through rotational axis of said engine intersects the rotational axis of the engine proximate a plane of a fan assembly (16), wherein said plane is vertically perpendicular to the rotational axis.
